# EUROPÄISCHE PATENTSCHRIFT

(11) **EP 3 995 754 B1**
(45) Veröffentlichungstag und Bekanntmachung des Hinweises auf die Patenterteilung: **03.01.2024**
(21) Anmeldenummer: 20206656.9
(22) Anmeldetag: 10.11.2020
(51) Int. Cl.: F24H 9/14, F28F 9/013, F28F 9/26, F24H 9/12, F28D 7/02, F28D 7/04, F28F 1/08, F28D 20/00

(54) **WÄRMESPEICHER**
HEAT STORAGE DEVICE
ACCUMULATEUR DE CHALEUR

(43) Veröffentlichungstag der Anmeldung: 11.05.2022
(73) Patentinhaber: Mahmutovic, Nedzib, 4060 Leonding (AT)
(72) Erfinder: Mahmutovic, Nedzib, 4060 Leonding (AT)
(74) Vertreter: Patentanwaltskanzlei Matschnig & Forsthuber OG

(56) Entgegenhaltungen:
- EP-A1- 1 267 130
- EP-A1- 1 724 543
- EP-A1- 3 726 114
- CN-A- 102 221 262
- CN-A- 105 066 449
- DE-U1-202005 013 700
- KR-B1- 101 204 014

## Beschreibung

Die Erfindung betrifft einen Wärmespeicher zur Speicherung von Wasser nach dem Oberbegriff des Anspruchs 1. So ein Wärmespeicher ist aus DE 20 2005 013700 U1 bekannt.

Üblicherweise werden in handelsüblichen Wärmespeichern trotz der Vorteile eines Spiralrohres, diese nicht eingesetzt, da eine mediendichte Verbindung für Spiralrohre, wie sie für Wärmespeicher erforderlich ist, um diese einsetzen zu können, aus dem Stand der Technik nicht bekannt sind.

Um ein Spiralrohr mit einem weiteren Rohr, einem Wärmespeicher, usw. zu verbinden, werden im Stand der Technik ein Verbinder mit einer einfachen Schraubverbindung und einer Dichtung, beispielsweise aus Gummi, verwendet. Allerdings ruft ein solcher Verbinder eine Beschädigung bei Teilen, wie beispielsweise der Dichtung, hervor was zum Auslecken des im Rohr verlaufenden Mediums führt. Auch können durch unvermeidbare chemische Reaktionen bzw. Alterung solche Dichtungen zum Versagen und Eindringen eines korrosiven Wärmeträgermediums in das zu erwärmende Medium (z.B. Trinkwasser) führen. Ferner können auch lösbare Verbindungen zwischen Rohr und Verbinder vorgesehen sein, doch diese Verbindungen aus dem Stand der Technik neigen bei Vibrationen zur Undichtigkeit und Versagen.

In einem Wärmespeicher werden, wie bereits erwähnt, üblicherweise keine Spiralrohre eingesetzt, da die Verbindungsstücke zwischen dem Rohr und Verbindern aus dem Stand der Technik nicht mediendicht sind sowie auch nicht die dafür notwendigen Sicherheiten und Normerfordernisse für den Einsatz in Wärmespeichern aufweisen und deshalb nicht dafür eingesetzt werden, obwohl diese viele Vorteile bieten (flexibel formbar, usw.).

Ferner sind Speicherverluste ein weiteres Kriterium zur energetischen Bewertung von Wärmespeichern. Speicherverluste entstehen grundsätzlich durch die vorhandene Temperaturdifferenz zwischen dem Wärmespeicher und der Umgebung. Im Allgemeinen wird zwischen inneren und äußeren Verlusten unterschieden, wobei die inneren Verluste reine Energieverluste darstellen, welche durch Mischvorgänge bei der Be- und Entladung sowie innerer Wärmeleitung zwischen verschiedenen Temperaturzone verstärkt durch die vertikale Wärmeleitung der Speicherwand des Behälters. Überdies werden innere Wärmeverluste durch den Wärmeaustauschvorgang zwischen dem Wärmeträgermedium und festen Einbauten hervorgerufen. Innere Verluste haben weiterhin einen negativen Einfluss auf die Schichtung und unterstützen den Abbau dieser Schichtungen (siehe hierzu auch *"*Beitrag zur thermodynamischen Analyse und Bewertung von Wasserwärmespeichern in Energieumwandlungsketten" [Dissertation Dipl. Ing. Robert Huhn 2006 - Fakultät für Maschinenwesen der Technischen Universität Dresden*]).*

Innere Verluste verursachen eine schlechtere Temperaturschichtung sowie deren schnelleren Abbau. Sie führen auf diese Art zu höheren mittleren Rücklauftemperaturen von Wärmespeichern hin zum Wärmeerzeuger.

Es ist eine Aufgabe der Erfindung einen verbesserten Wärmespeicher bereitzustellen.

Diese Aufgabe wird dadurch gelöst, dass die Mantelfläche schraubenlinienförmig gewellt ist, und das Rohr des zumindest einen Wärmetauschers als Rohrschlange mit zumindest in einer Orthogonalebene zur Längsachse des Behälters spiralförmig angeordneten Wendel angeordnet ist.

Es kann vorgesehen sein, dass die mediendichte Verbindung Folgendes umfasst:
- einen Verbinder, umfassend einen Überwurfring und einen Einschraubstutzen, wobei der Überwurfring eine erste schraubenlinienförmige, zur Mantelfläche des Rohres korrespondierende Kontur aufweist und auf den Endbereich des Rohres auf die Mantelfläche außenseitig aufgeschraubt ist, und wobei der Einschraubstutzen eine zweite schraubenlinienförmige, zur Mantelfläche des Rohres korrespondierende Kontur aufweist und in den Endbereich des Rohres innenseitig eingeschraubt ist, wobei zumindest ein Abschnitt des Endbereiches des Rohres zwischen der ersten Kontur des Überwurfringes und der zweiten Kontur des Einschraubstutzens angeordnet ist,
und wobei der Überwurfring zur Behebung eines Spiels zwischen dem Einschraubstutzen und der Mantelfläche des Rohres sowie zwischen dem Überwurfring und der Mantelfläche des Rohres gegen den Einschraubstutzen verpresst ist, sodass der Abschnitt des Endbereiches des Rohres mediendicht und formschlüssig an der ersten Kontur des Überwurfringes und an der zweiten Kontur des Einschraubstutzens anliegt.

Um ein händisches Aufschrauben zu ermöglichen entspricht das Spiel bzw. der Abstand zwischen der ersten Kontur und der zweiten Kontur beispielsweise mindestens 1,1 mal der Wandstärke des Rohres.

Die erste und zweite schraubenlinienförmige Kontur ist gewissermaßen als Gewinde zu verstehen, welches mit der schraubenlinienförmig gewellten Mantelfläche des Rohres, welche Mantelfläche gewissermaßen als Gegengewinde zu der ersten und zweiten Kontur ausgebildet ist, korrespondieren.

Unter dem Begriff "Spiel" sind beispielsweise Hohlräume zwischen der ersten Kontur und der Mantelfläche, und zwischen der zweiten Kontur und der Mantelfläche zu verstehen, wobei dies dem Fachmann bekannt ist. Ein solches Spiel bzw. solche Hohlräume sind zwangsweise vorhanden, um ein einfaches Ein- und Aufschrauben des Überwurfrings und des Einschraubstutzen per Hand zu ermöglichen.

Es kann vorgesehen sein, dass das Rohr als Spiralrohr ausgebildet ist.

Es sei darauf hingewiesen, dass zwischen einem Spiralrohr und einem Wellenrohr insofern ein Unterschied besteht, als das Wellenrohr zueinander parallel angeordnete und in Längsrichtung des Wellenrohres orthogonal stehende Ausbuchtungen aufweist, welche insgesamt kein Gewinde oder Ähnliches bilden, was ein Aufschrauben eines Gegenstückes ermöglicht.

Im Allgemeinen weisen flexible Spiralrohre im Vergleich mit ringförmigen bzw. wellenförmigen Rohren einen kleineren Strömungswiderstand auf und erleichtern dadurch den Wärmeaustausch zwischen einem im Rohr verlaufenden Medium, beispielweise einer Flüssigkeit, und einem außerhalb des Rohres befindlichen Medium. Ferner können solche Spiralrohre in der Regel frei gebogen werden, sodass eine optimale Anpassbarkeit in der Verlegung solcher Rohre ermöglicht wird.

Es sei hier nochmals angemerkt, dass erfindungsgemäß kein Wellenrohr vorgesehen ist.

Als Wärmträgermedium kann beispielsweise ein Gemisch aus Wasser und Frostschutzmittel vorgesehen sein.

Es kann vorgesehen sein, dass der Einschraubstutzen einen Verbindungsabschnitt, welcher in einem eingeschraubten Zustand des Einschraubstutzens in dem Rohr von dem Endbereich des Rohres vorsteht und zum Anschluss eines weiteren Einschraubstutzens oder einer weiteren Einrichtung zur Zu- und Abfuhr eines Mediums vorgesehen ist, und einen Schraubabschnitt, welcher die zweite schraubenlinienförmige Kontur aufweist, umfasst.

Es kann vorgesehen sein, dass sich der Verbindungsabschnitt in einem Übergangsabschnitt hin zu dem Schraubabschnitt verjüngt.

Es kann vorgesehen sein, dass der Einschraubstutzen mit dem Überwurfring verschweißt ist, vorzugsweise im Übergangsbereich des Einschraubstutzens.

Der Vorteil besteht darin, dass das in der Regel dünnwandige Rohr durch den Überwurfring und den Einschraubstutzen geschützt wird, sodass während des Schweißens am Rohr kein Schaden entstehen kann.

Es kann vorgesehen sein, dass der Überwurfring zumindest eine Fase an einem seiner Enden aufweist, vorzugsweise zwei Fasen an gegenüberliegenden Enden aufweist.

Es kann vorgesehen sein, dass der Überwurfring zumindest eine Fase an einem seiner Enden aufweist, vorzugsweise zwei Fasen an gegenüberliegenden Enden aufweist.

Eine Fase ist im Allgemeinen eine abgeschrägte Fläche an einer Werkstückkante. Der Fasenwinkel ist gemessen von der Ebene der Kante, an welcher die Fase angeordnet wird. Es kann vorgesehen sein, dass der Fasenwinkel abhängig vom jeweils verwendeten Medium ausgebildet ist.

Die zumindest eine Fase des Überwurfrings ist beispielsweise wegen einer weiteren Lötbarkeit und Schutz vor Rohrbruch vorgesehen.

Ein weiterer Vorteil einer Lötverbindung zwischen dem Rohr und dem Überwurfring liegt darin, dass durch das Löten und dem Verpressen alle Spalten geschlossen werden und damit die Gefahr von Spaltkorrosionsbildung verhindert wird.

Spaltkorrosion tritt an Metallteilen bei Vorhandensein eines korrosiven Mediums in engen, nicht abgeschlossenen Spalten wie Überlappungen und/oder nicht durchgeschweißten Schweißnähten auf. Treibende Kraft sind Konzentrationsunterschiede zwischen dem Medium im Spalt und im Bereich außerhalb des Spalts, welche durch die im Spalt gehemmte Diffusion der Reaktionspartner verursacht werden. Selbst nicht-rostende CrNi-Stähle können in Spalten korrodieren, wenn dort keine schützende Oxidschicht vorhanden ist. Spaltkorrosion kann verhindert werden, indem man konstruktiv auf Spalte verzichtet oder diese so groß ausführt, dass die Diffusion der Medien nicht behindert wird.

Spaltkorrosion tritt beispielsweise auf, wenn bei Verwendung von Edelstahl die Oxidschicht des Edelstahls zerstört wird, beispielsweise durch Schweißen oder mechanisches Kratzen oder dass aggressive Medien bei gleichzeitigem Fehlen von Sauerstoff vorhanden sind. Die Spaltkorrosion tritt aus diesem Grund häufig in engen Spalten und kleinen Hohlräumen auf.

Es kann vorgesehen sein, dass die Wandstärke des Rohres 2 mm beträgt.

Es kann vorgesehen sein, dass die Länge der zweiten Kontur des Einschraubstutzens im Vergleich zur Länge der ersten Kontur des Überwurfringes um 7 mal der Wandstärke des Rohres länger oder kürzer ist, abhängig vom verwendeten Medium.

Es kann vorgesehen sein, dass der Schraubabschnitt des Einschraubstutzens an seinem dem Verbindungsabschnitt gegenüberliegenden Ende eine Abschlusskante aufweist, welche mit einem Radius abgerundet ist, vorzugsweise ist der Radius gleich der Wandstärke des Rohres.

Durch die abgerundete Abschlusskante wird vermieden, dass das Spiralrohr innenseitig beim Einschrauben des Einschraubstutzens beschädigt wird.

Es kann vorgesehen sein, dass der Überwurfring an einem Ende des Überwurfringes mit dem Rohr verlötet ist.

Es kann vorgesehen sein, dass die schraubenlinienförmig gewellte Mantelfläche als Gewinde mit Gewindegängen ausgebildet ist.

Es kann vorgesehen sein, dass das Rohr des zumindest einen Wärmetauschers als Rohrschlange mit zumindest in einer Orthogonalebene zur Längsachse des Behälters spiralförmig angeordneten Wendel.

Es kann vorgesehen sein, dass der zumindest eine Wärmetauscher zumindest zwei Wendeln umfasst, wobei sich das Rohr in einer Wendel ausgehend von einem maximalen Radius der Rohrschlange der Längsachse radial annähert und bei einem Radius, kleiner als der maximale Radius, zur nächsten Wendel übergeht und sich ausgehend von dem kleineren Radius der Längsachse radial bis zum maximalen Radius entfernt.

Durch geschichtete Be- und Entladung eines Wärmespeichers wird eine bessere Ausnutzung der gespeicherten thermischen Energie sowie eine effektivere Nutzung der angebotenen Energie bei der Beladung erreicht. Niedrige Rücklauftemperaturen zur Wärmequelle bzw. kaltes Speichermedium im unteren Bereich des Behälters verbessern den Wirkungsgrad.

Es kann vorgesehen sein, dass die Rohrschlange des zumindest einen Wärmetauschers aufgrund von unterschiedlichen maximalen Radien der Wendeln einen konischen Verlauf aufweist.

Es kann vorgesehen sein, dass der Wärmespeicher zumindest zwei Wärmetauscher, vorzugsweise zumindest drei Wärmetauscher, umfasst.

Dabei kann vorgesehen sein, dass die Rohre der zumindest zwei Wärmetauscher als Rohrschlange mit zumindest in einer Orthogonalebene zur Längsachse des Behälters spiralförmig angeordneten Wendel angeordnet sind, wobei die Rohre in der zumindest einen Orthogonalebene parallel zueinander verlaufen.

Es kann vorgesehen sein, dass die Rohrschlange jedes Wärmetauschers einen unterschiedlichen maximalen Radius aufweist.

Es kann vorgesehen sein, dass ein Wärmetauscher in einem unteren Bereich des Behälters angeordnet ist.

Es kann vorgesehen sein, dass der maximale Radius der Rohrschlange an der Innenwand des unteren Bereichs des Behälters ausgerichtet ist, sodass der Abstand zwischen Rohr und Innenwand 1 bis 50 mm, vorzugsweise 1 bis 15 mm, ist.

Im unteren Bereich bzw. am unteren Boden des Behälters eines Wärmespeichers ist es besonders schwierig das dort im Vergleich zum oberen Bereich des Behälters warme Wasser zu erwärmen, da mit handelsüblichen Rohren, beispielsweise einem Wellenrohr, das im unteren Bereich des Behälters vorhandene Totvolumen auszufüllen, um das dortige Wasser zu erwärmen.

Unter "Totvolumen" ist der Teil des Speichermediums zu verstehen, der sich unter dem Auslass des unteren Wärmetauschers befindet. Dieses Totvolumen kann beim normalen Betrieb des Speichers durch das vom Wärmetauscher nach oben steigende warme Wasser nicht erwärmt werden uns ist somit nutzlos.

Aufgrund des durch die Mantelfläche des Rohres bzw. Spiralrohres geformten Gewindes wird durch das Verdrehen des Rohres bzw. Spiralrohres zu einer Rohrschlange eine solche Eigenstatik des Rohres erzeugt, sodass das Rohr des Wärmetauschers auch im Totvolumen des Behälters im Gegensatz zum Stand der Technik angeordnet werden kann, ohne dass es aufgrund einer fehlenden Halterung in diesem Bereich mit dem Behälter in Kontakt kommt und es dadurch zu einer Wärmebrücke zwischen Rohr und Behälter kommt.

Es kann vorgesehen sein, dass der Wärmespeicher eine Rohrhalterung zur Aufhängung des Rohres des zumindest einen Wärmetauschers umfasst, wobei die Rohrhalterung zumindest zwei parallel zur Längsachse des Behälters angeordnete Steher und zumindest eine die zumindest zwei Steher verbindenden Querbalken umfasst, wobei Abschnitte des Rohres an dem Querbalken aufliegen.

Es kann vorgesehen sein, dass Abschnitte des Rohres des zumindest einen Wärmetauschers mittels mehrerer Führungslager an den Stehern der Rohrhalterung angeordnet sind, wobei die Führungslager vorzugsweise als Drähte ausgebildet sind. Hierbei kann vorgesehen sein, dass die Rohre in den Führungslagern lose bzw. locker und nicht bewegungsfest angeordnet sind, wodurch eine Kalkbildung vermieden wird, da sich die Rohre in den Führungslagern aufgrund der Bewegung des Wassers innerhalb des Behälters durch die Erwärmung bewegt.

Es kann vorgesehen sein, dass die Steher der Rohrhalterung an ihren unteren Enden bzw. an den dem Kaltwasserzulauf des Behälters zugewandten Enden an einem Prallblech befestigt sind, wobei das Prallblech in seiner flächigen Ausdehnung orthogonal zur Längsachse des Behälters angeordnet ist. Hierbei kann vorgesehen sein, dass das Prallblech in Form eines Kreuzes ausgebildet ist, wodurch mehr Befestigungs- bzw. Auflagepunkte für die Rohre gebildet werden können und eine sichere Konstruktion ermöglicht wird.

Das Prallblech bewirkt eine gleichmäßige Verteilung des über den Kaltwasserzulauf in den Behälter zugeführte kalte Wasser in dem unteren Bereich des Wärmespeichers, wodurch das kalte Wasser gleichmäßig durch den zumindest einen Wärmetauscher erwärmt werden kann.

Es kann vorgesehen sein, dass der Kaltwasserzulauf als Rohr bzw. als Rohrstutzen ausgebildet ist, welches sich von dem unteren Bereich des Behälters bis zu einer Öffnung erstreckt. Dabei kann vorgesehen sein, dass das Rohr zumindest abschnittsweise in Richtung der Öffnung eine exzentrische Reduzierung aufweist. Dies verbessert die Einströmung und die Einlaufgeschwindigkeit des einzuströmenden Mediums. Ebenso wird die Isolierung verbessert.

Nachfolgend wird die Erfindung anhand von beispielhaften Zeichnungen näher erläutert. Hierbei zeigt
Fig. 1 einen beispielhaften Wärmespeicher mit einem Wärmetauscher, welcher in einem Behälter des Wärmespeichers angeordnet ist, in einem Querschnitt, wobei der Wärmetauscher jeweils ein Rohr mit mehreren Einlässen und einem Auslass für das Wärmeträgermedium aufweisen, wobei der Ein- und Auslass über eine mediendichte Verbindung an dem Behälter angeordnet ist,
Fig. 1A zeigt ein weiteres Beispiel eines Wärmespeichers mit zwei Wärmespeichern,
Fig. 1B zeigt einen weiteren beispielhaften Wärmespeicher mit einem Wärmetauscher,
Fig. 2 eine Detailschnittansicht einer beispielhaften mediendichten Verbindung eines Rohres eines Wärmetauschers mit einem aufgeschraubten Überwurfring und einem eingeschraubten Einschraubstutzen, wobei der Überwurfring und der Einschraubstutzen nicht gegeneinander verpresst sind,
Fig. 2a eine Detailvergrößerung eines Bereichs des Einschraubstutzens aus Fig. 1,
Fig. 3 eine Detailschnittansicht des Rohres aus Fig. 2, wobei der Überwurfring und der Einschraubstutzen gegeneinander verpresst sind,
Fig. 4 eine Schnittansicht des Rohres aus Fig. 3, wobei der Überwurfring und der Einschraubstutzen miteinander verschweißt sind und der Überwurfring mit dem Rohr verlötet ist,
Fig. 5 eine Schnittansicht des Rohres aus Fig. 4, wobei das Rohr beispielhaft in einem Wärmespeicher verlegt ist,
Fig. 6 ein weiteres Beispiel eines Rohres mit einem Verbinder, welcher einen Flansch aufweist,
Fig. 7A eine Ansicht von oben einer beispielhaften Wendel einer Rohrschlange,
Fig. 7B eine schematische Darstellung des Verlaufs zweier beispielhafter Wendeln der Rohrschlange,
Fig. 8 eine beispielhafte Rohrhalterung zur Aufhängung des Rohres der Wärmetauscher, wobei die Rohrhalterung auf einem Prallblech angeordnete Steher und die Steher verbindende Querbalken aufweist, wobei die Rohrschlange mittels einer Führungslager befestigbar ist,
Fig. 8A eine Detailansicht der Verbindung zwischen den Stehern und des Prallblechs und eines in einem Führungslager angeordneten Rohrabschnitts, und
Fig. 8B eine Detailansicht der Verbindung zwischen den Stehern und der Querbalken und eines in einem Führungslager angeordneten Rohrabschnitts.

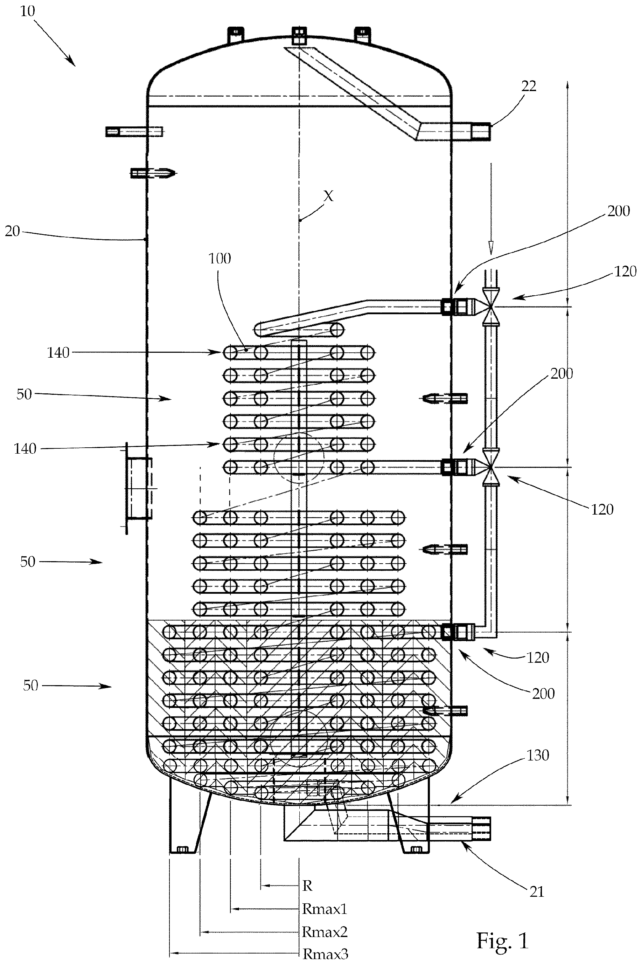

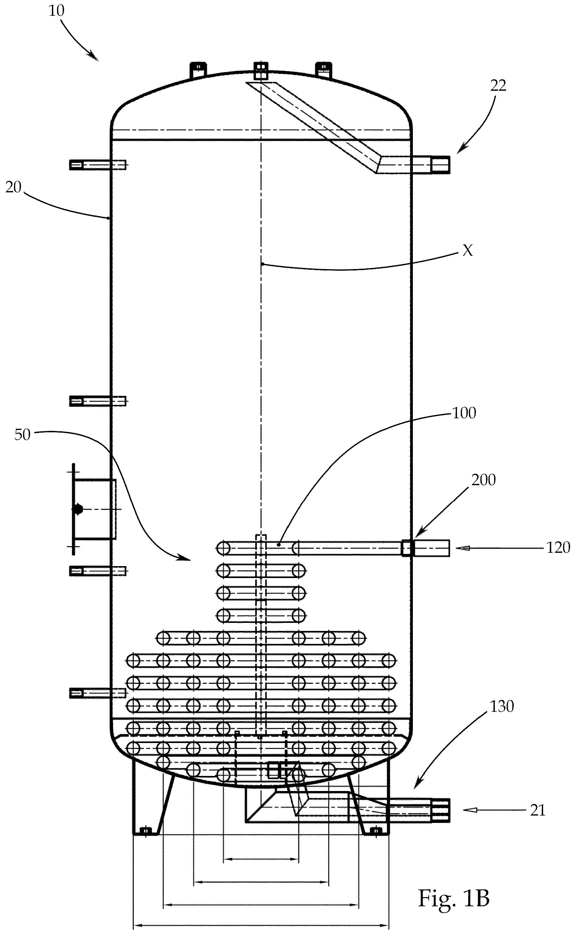

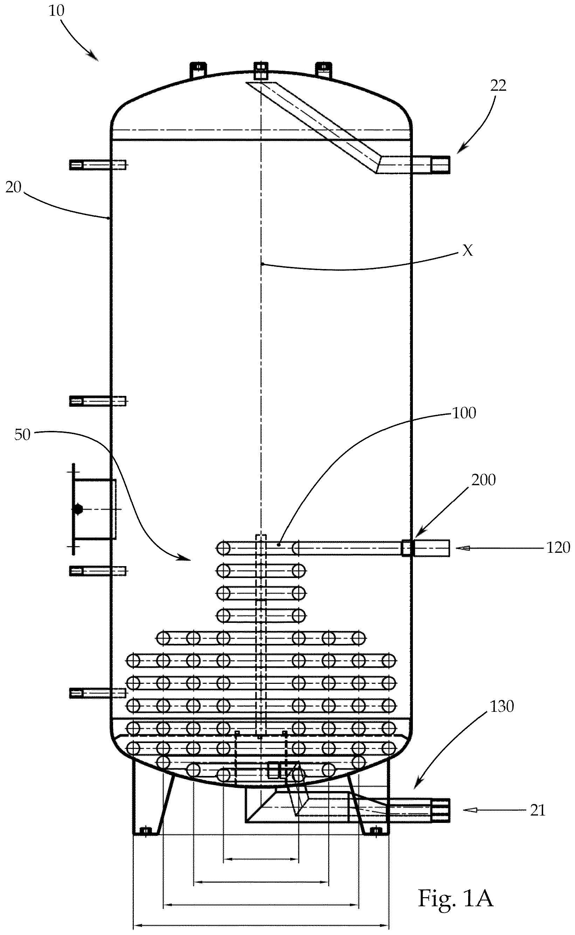

**Fig. 1** zeigt einen beispielhaften Wärmespeicher **10** zur Speicherung von Wasser mit einem Wärmetauscher **50** zur Erwärmung des Wassers, welcher Wärmespeicher **10** einen Behälter **20** mit einer Längsachse **X**, in welchem das zu erwärmende Wasser speicherbar ist, umfasst.

Der Behälter **20** weist dabei einen Kaltwasserzulauf **21** zur Zuführung des Kaltwassers und einen Warmwasserablauf **22** zur Entnahme des Warmwassers auf, wobei der Kaltwasserzulauf **21** in einem unteren Bereich des Behälters **20** und der Warmwasserablauf **22** in einem oberen Bereich des Behälters **20** angeordnet ist. Ferner ist der Kaltwasserzulauf **21** als Rohr bzw. als Rohrstutzen ausgebildet, welches sich von dem unteren Bereich des Behälters **20** bis zu einer Öffnung erstreckt. Das Rohr bzw. der Kaltwasserzulauf **21** weist eine in Richtung der Öffnung exzentrische Reduzierung auf, wie in **Fig. 1** zu sehen ist.

Der Wärmespeicher **10** umfasst in dem gezeigten Beispiel einen Wärmetauscher **50**, welche innerhalb des Behälters **20** angeordnet und eingerichtet ist, im Behälter **20** angeordnetes Wasser mit Hilfe eines in dem Wärmetauscher **50** transportierbaren Wärmeträgermediums zu erwärmen.

Dieser Wärmetauscher **50** weist ein flexibles metallisches Rohr **100** mit einer Mantelfläche auf, wobei die Mantelfläche schraubenlinienförmig gewellt ist und als Spiralrohr ausgebildet ist, und wobei das Rohr **100** zumindest zwei Endbereiche **110** aufweist, wobei das Rohr **100** zumindest einen Einlass **120** und zumindest einen Auslass **130** für das Wärmeträgermedium aufweist, wobei der Ein- und Auslass **120**, **130** über eine mediendichte Verbindung an dem Behälter **20** angeordnet sind.

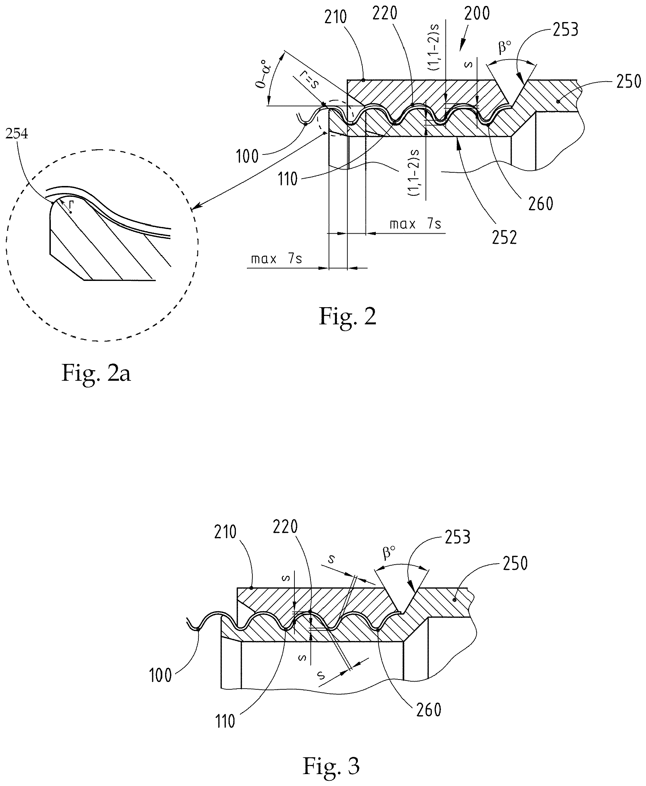

**Fig. 2** zeigt eine Detailansicht einer beispielhaften mediendichten Verbindung, wobei die mediendichte Verbindung einen Verbinder **200**, umfassend einen Überwurfring 210 und einen Einschraubstutzen **250**, umfasst.

Der Überwurfring **210** weist eine erste schraubenlinienförmige, zur Mantelfläche des Rohres korrespondierende Kontur **220** auf und ist auf den Endbereich **110** des Rohres **100** auf die Mantelfläche außenseitig aufgeschraubt. Der Einschraubstutzen **250** weist eine zweite schraubenlinienförmige, zur Mantelfläche des Rohres korrespondierende Kontur **260** auf und ist in den Endbereich **110** des Rohres **100** innenseitig eingeschraubt, wobei zumindest ein Abschnitt des Endbereiches **110** des Rohres **100** zwischen der ersten Kontur **220** des Überwurfringes und der zweiten Kontur **260** des Einschraubstutzens angeordnet ist.

Dabei ist der Überwurfring **210** zur Behebung eines Spiels zwischen dem Einschraubstutzen **250** und der Mantelfläche des Rohres sowie zwischen dem Überwurfring **210** und der Mantelfläche des Rohres gegen den Einschraubstutzen **250** verpresst, sodass der Abschnitt des Endbereiches **110** des Rohres mediendicht und formschlüssig an der ersten Kontur **220** des Überwurfringes und an der zweiten Kontur **260** des Einschraubstutzens anliegt.

Der Einschraubstutzen **250** umfasst ferner einen Verbindungsabschnitt **251**, welcher in einem eingeschraubten Zustand des Einschraubstutzens **250** in dem Rohr **100** von dem Endbereich **110** des Rohres **100** vorsteht und zum Anschluss einer weiteren Einrichtung zur Zu- und Abfuhr eines Wärmeträgermediums vorgesehen ist, und einen Schraubabschnitt **252**, welcher die zweite schraubenlinienförmige Kontur **260** aufweist. Der Verbindungsabschnitt **251** verjüngt sich in dem in den Figuren gezeigten Beispiel in einem Übergangsabschnitt **253** hin zu dem Schraubabschnitt **252**.

Der Überwurfring **210** weist in dem gezeigten Beispiel zwei entgegengesetzte Enden mit jeweils einer Fase auf, wobei eine erste Fase außenseitig an jenem Ende angeordnet ist, welches Ende dem Übergangsabschnitt **253** des Einschraubstutzens **250** gegenüberliegt bzw. am nächsten ist, und wobei eine zweite Fase innenseitig an jenem Ende des Überwurfringes **210** angeordnet ist, welches Ende dem Verbindungsabschnitt **251** des Einschraubstutzens **250** entgegengesetzt ist.

Eine Fase ist im Allgemeinen eine abgeschrägte Fläche an einer Werkstückkante. Der Fasenwinkel **α** ist gemessen von der Ebene der Kante, an welcher die Fase angeordnet wird, wobei der Fasenwinkel **α** beispielsweise in **Fig. 2** eingezeichnet ist. Es kann vorgesehen sein, dass der Fasenwinkel **α** abhängig vom jeweils verwendeten Medium im Wärmespeicher ausgebildet ist.

Aufgrund dieser Ausführungsform des Einschraubstutzens **250**, wie in den Figuren ersichtlich ist, wird zuerst der Überwurfring **210** auf den Endbereich **110** des Rohres **100** aufgeschraubt, wobei zur Erfüllung einer freien Schraubverbindung zwischen dem Überwurfring **210** und der Mantelfläche des Rohres **100** ein Spiel vorhanden ist.

Nachfolgend wird der Einschraubstutzen **250** in den Endbereich **110** des Rohres **100** eingeschraubt, wobei zur Erfüllung einer freien Schraubverbindung zwischen dem Einschraubstutzen **250** und der Mantelfläche des Rohres **100** ein Spiel vorhanden ist, und wobei zumindest ein Abschnitt des Endbereichs **110** des Rohres **100** zwischen der ersten Kontur **220** des Überwurfringes **210** und der zweiten Kontur **260** des Einschraubstutzens **250** angeordnet ist. In **Fig. 2** ist ein solcher aufgeschraubter Zustand des Überwurfrings **210** und ein solcher eingeschraubter Zustand des Einschraubstutzens **250** zu sehen, wobei ebenso das Spiel bzw. Hohlräume zwischen der ersten Kontur **220** des Überwurfrings **210** und der Mantelfläche und der zweiten Kontur **260** des Einschraubstutzens **250** und der Mantelfläche ersichtlich ist/sind.

In **Fig. 2** bzw. in der Detailvergrößerung von **Fig. 2a** ist ebenfalls zu sehen, dass der Schraubabschnitt **252** des Einschraubstutzens **250** an seinem dem Verbindungsabschnitt **251** gegenüberliegenden Ende eine Abschlusskante **254** aufweist, welche mit einem Radius **r** abgerundet ist, vorzugsweise ist der Radius **r** gleich der Wandstärke s des Rohres **100**.

Anschließend wird der Überwurfringes **210** und des Einschraubstutzens **250** gegeneinander zur zumindest teilweisen Behebung des Spiels verpresst, sodass der Abschnitt des Endbereiches **110** des Rohres **100** mediendicht und formschlüssig an der ersten Kontur **220** des Überwurfringes **210** und an der zweiten Kontur **260** des Einschraubstutzens **250** anliegt, wie in **Fig. 3** dargestellt ist. Das Verpressen des Überwurfringes **210** und des Einschraubstutzens **250** erfolgt beispielsweise mittels einem Presswerkzeug, wobei ein Stützdorn in den Einschraubstutzen **250** eingeführt und ein äußerer Druck auf den Überwurfring **210** ausgeübt wird, sodass das Spiel bzw. die Hohlräume zwischen den Konturen **220**, **260** und der Mantelfläche behoben sind.

Zur mediendichten Verbindung zwischen dem Rohr **100** und dem Verbinder **200** weist der Abschnitt des Endbereichs **110** des Rohres **100,** welcher zwischen der ersten Kontur **220** des Überwurfringes **210** und der zweiten Kontur **260** des Einschraubstutzens **250** angeordnet ist, eine Länge von drei Gewindegängen auf, wie in den Figuren ersichtlich ist.

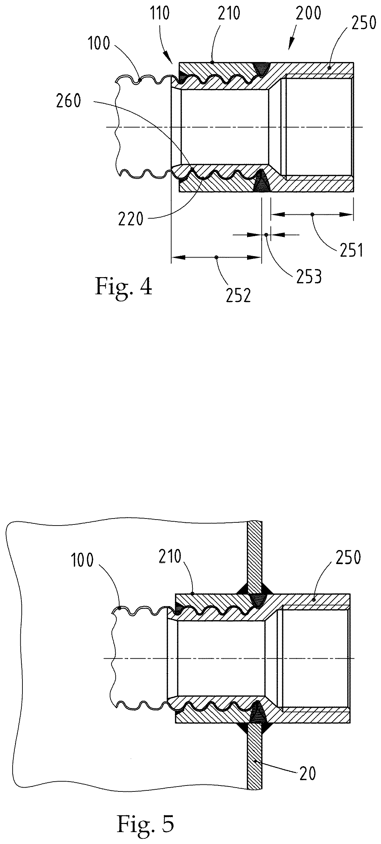

In einem weiteren Schritt wird der Einschraubstutzen **250** im Übergangsabschnitt **253** mit dem Überwurfring **210** verschweißt, wie in **Fig. 4** zu sehen ist. Bei dem Verschweißen wird gleichzeitig auch ein Ende des Rohrs **100** mitverschweißt. Die Schweißnaht verläuft dabei entlang der ersten Fase des Überwurfrings **210** und dem Übergangsabschnitt **253** des Einschraubstutzens **250**.

In einem weiteren Schritt wird der Überwurfring **210** an jenem Ende, welches die zweite Fase aufweist, mit dem Rohr **210** verlötet. Dadurch soll eine sonst mögliche Spaltkorrosion verhindert werden.

**Fig. 5** zeigt ferner eine beispielhafte Anordnung einer oben beschriebenen mediendichten Verbindung in einem Wärmespeicher mit einem Behälter **20**, wobei der Verbinder **200** in einer Ausnehmung des Behälters **20** angeordnet ist.

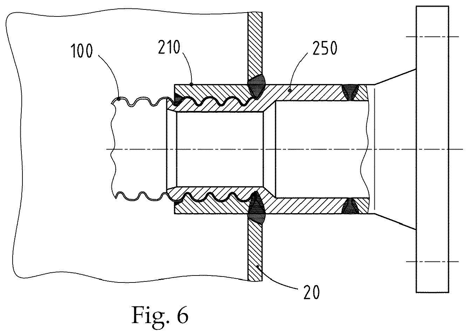

**Fig. 6** zeigt ferner eine beispielhafte Anordnung einer oben beschriebenen mediendichten Verbindung in einem Wärmespeicher mit einem Behälter **20**, wobei der Verbinder **200** in einer Ausnehmung des Behälters **20** angeordnet ist, und wobei der Verbindungsabschnitt des Einschraubstutzens einen Flansch aufweist.

In **Fig. 1** ist ferner zu sehen, dass das Rohr **100** des Wärmetauschers **50** als Rohrschlange mit mehreren in einer Orthogonalebene zur Längsachse **X** des Behälters **20** spiralförmig angeordneten Wendeln **140**.

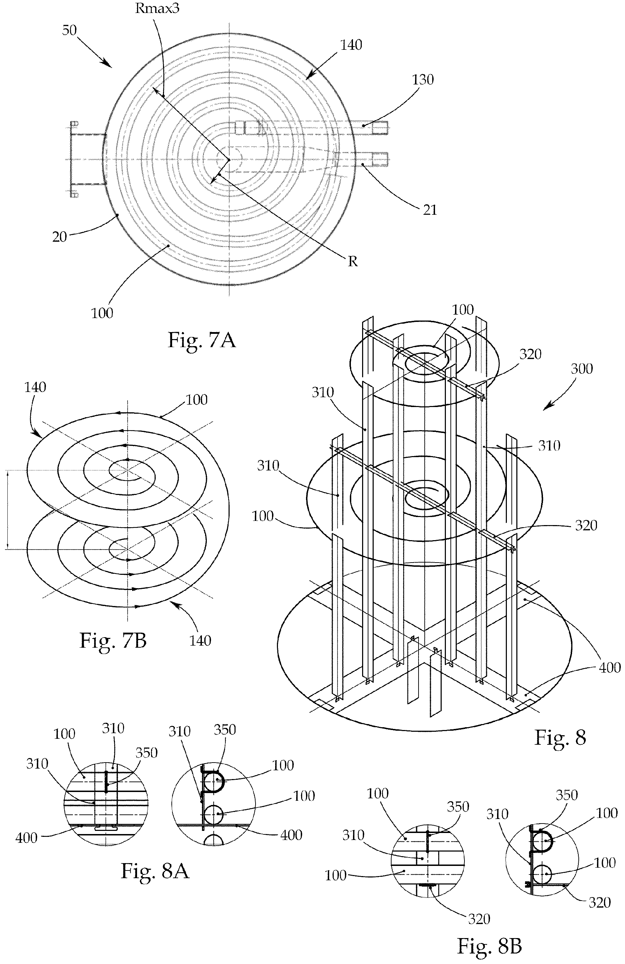

**Fig. 7A** zeigt eine Ansicht einer beispielhaften Wendel **140**, wobei sich das Rohr **100** in einer Wendel **140** ausgehend von einem maximalen Radius - in dem gezeigten Beispiel in **Fig. 7** ist der maximale Radius **Rmax3** des untersten Abschnitts Wärmetauschers **50** zu sehen - der Rohrschlange der Längsachse **X** radial annähert und bei einem Radius **R**, kleiner als der maximale Radius **Rmax3**, zur nächsten Wendel **140** übergeht und sich ausgehend von dem kleineren Radius **R** der Längsachse **X** radial bis zum maximalen Radius **Rmax3** entfernt. **Fig. 7B** zeigt eine schematische Darstellung zweier Wendeln **140** und den Übergang des Rohres von einer Wendel auf die nächstgelegene Wendel.

Wie in **Fig. 1** ebenfalls zu sehen ist, kann die Rohrschlange des Wärmetauschers **50** aufgrund von unterschiedlichen maximalen Radien der Wendeln **140** einen konischen Verlauf aufweisen. Ebenso weist der Wärmetauscher **50** aufgrund seiner unterschiedlichen maximalen Radien **Rmax1**, **Rmax2**, **Rmax3** einen insgesamt konischen Verlauf auf, wie in **Fig. 1** zu sehen ist.

Im untersten Abschnitt des Wärmetauschers **50** in **Fig. 1** ist der Verlauf der Rohrschlange bzw. der Wendeln so gewählt, dass das Wasservolumen, welches durch die Rohre mit dem Radius **Rmax1** eingenommen wird, gleich dem Wasservolumen, welches durch die Rohre mit dem Radius **Rmax2** weniger dem Wasservolumen durch die Rohre mit **Rmax1** eingenommen wird. Dies gilt auch für die weiteren Volumina. Dies soll durch die unterschiedlich schraffierten Flächen in **Fig. 1** dargestellt werden. Dies ist vorteilhaft für die Schichtung des Wassers innerhalb des Behälter des Wärmetauschers, wodurch stärke bzw. ungleichmäßige Verwirbelungen bei der Umschichtung von aufsteigendem heißen Wasser vermieden werden soll.

Ferner ist zu sehen, dass der maximale Radius der Rohrschlange des Wärmetauschers **50** an der Innenwand des unteren Bereichs des Behälters **20** ausgerichtet ist, sodass der Abstand zwischen Rohr **100** und Innenwand 1 bis 50 mm, vorzugsweise 1 bis 15 mm, beträgt.

**Fig. 8** zeigt eine Rohrhalterung 300 zur Aufhängung des Rohres **100** der Wärmetauscher **50**, wobei die Rohrhalterung **300** zumindest zwei parallel zur Längsachse **X** des Behälters **20** angeordnete Steher **310** (in dem gezeigten Beispiel sechs Steher, wobei zwei eine von den übrigen Stehern unterschiedliche Länge aufweisen) und zumindest eine die zumindest zwei Steher **310** verbindenden Querbalken **320** (in dem gezeigten Beispiel zwei Querbalken von unterschiedlicher Länge) umfasst, wobei Abschnitte des Rohres **100** an dem Querbalken **320** aufliegen, was in **Fig. 8**, als auch in **Fig. 8A** und **8B** zu sehen ist.

Ferner sind Abschnitte des Rohres **100** der Wärmetauscher **50** mittels mehrerer Führungslager **350** an den Stehern **310** der Rohrhalterung **300** angeordnet bzw. aufgehängt, wobei die Führungslager **350** vorzugsweise als Drähte ausgebildet sind. Hierzu zeigen **Fig. 8A** und **8B** in unterschiedlichen Ansichten eine solche Aufhängung von Abschnitten des Rohres **100** mittels Drähte, wobei das Rohr **100** durch die Drähte nicht vollständig bewegungsfest an den Stehern montiert ist, sodass sich das Rohr **100** beispielsweise bei einer Ausdehnung unter erhöhter Wärme, beispielsweise beim Transportieren des erwärmten Wärmeträgermediums, ausdehnen kann.

Ferner umfasst die Rohrhalterung ein Prallblech **400**, wobei die Steher **310** der Rohrhalterung **300** an ihren unteren Enden bzw. an den dem Kaltwasserzulauf **21** des Behälters **20** zugewandten Enden an dem Prallblech **400** befestigt sind, wobei das Prallblech **400** in seiner flächigen Ausdehnung orthogonal zur Längsachse **X** des Behälters **20** angeordnet ist.

**Fig. 1A** zeigt ein weiteres Beispiel eines Wärmespeichers **10** mit zwei Wärmetauschern **50**, wobei die Rohre **100** der zwei Wärmetauscher **50** als Rohrschlange mit mehreren in jeweils einer Orthogonalebene zur Längsachse **X** des Behälters **20** spiralförmig angeordneten Wendeln angeordnet sind, wobei die Rohre **100** in den jeweiligen Orthogonalebenen parallel zueinander verlaufen.

**Fig. 1B** zeigt ein weiteres Beispiel eines Wärmespeichers **10** mit einem Wärmetauscher **50**. Es sei ferner darauf hingewiesen, dass das oben Gesagte zu dem Beispiel aus **Fig. 1** auch auf die Ausführungsformen in **Fig. 1A** und **Fig. 1B** zutreffen.

### BEZUGSZEICHENLISTE

| | |
|---|---|
| Wärmespeicher | 10 |
| Behälter | 20 |
| Kaltwasserzulauf | 21 |
| Warmwasserablauf | 22 |
| Wärmetauscher | 50 |
| Rohr | 100 |
| Endbereich | 110 |
| Einlass | 120 |
| Auslass | 130 |
| Wendel | 140 |
| Verbinder | 200 |
| Überwurfring | 210 |
| Erste Kontur | 220 |
| Einschraubstutzen | 250 |
| Verbindungsabschnitt | 251 |
| Schraubabschnitt | 252 |
| Übergangsabschnitt | 253 |
| Abschlusskante | 254 |
| Zweite Kontur | 260 |
| Rohrhalterung | 300 |
| Steher | 310 |
| Querbalken | 320 |
| Führungslager | 350 |
| Prallblech | 400 |
| Längsachse | X |
| Fasenwinkel | α |

## Patentansprüche

1. Wärmespeicher (10) zur Speicherung von Wasser mit zumindest einem Wärmetauscher (50) zur Erwärmung des Wassers, welcher Wärmespeicher (10) Folgendes umfasst:
- einen Behälter (20) mit einer Längsachse (X), in welchem das zu erwärmende Wasser speicherbar ist, wobei der Behälter (20) einen Kaltwasserzulauf (21) zur Zuführung des Kaltwassers und einen Warmwasserablauf (22) zur Entnahme des Warmwassers aufweist, wobei der Kaltwasserzulauf (21) in einem unteren Bereich des Behälters (20) und der Warmwasserablauf (22) in einem oberen Bereich des Behälters (20) angeordnet ist,
- zumindest einen Wärmetauscher (50), welcher innerhalb des Behälters (20) angeordnet ist und eingerichtet ist, im Behälter (20) angeordnetes Wasser mit Hilfe eines in dem zumindest einen Wärmetauscher (50) transportierbaren Wärmeträgermediums zu erwärmen,
wobei der zumindest eine Wärmetauscher (50) ein flexibles metallisches Rohr (100) mit einer Mantelfläche aufweist, und wobei das Rohr (100) zumindest zwei Endbereiche (110) aufweist, und wobei das Rohr (100) zumindest einen Einlass (120) und zumindest einen Auslass (130) für das Wärmeträgermedium aufweist, wobei der Ein- und Auslass (120, 130) über eine mediendichte Verbindung an dem Behälter (20) angeordnet ist, **dadurch gekennzeichnet, dass** die Mantelfläche schraubenlinienförmig gewellt ist, und das Rohr (100) des zumindest einen Wärmetauschers (50) als Rohrschlange mit zumindest in einer Orthogonalebene zur Längsachse (X) des Behälters (20) spiralförmig angeordneten Wendel (140) angeordnet ist.

2. Wärmetauscher nach Anspruch 1, **dadurch gekennzeichnet, dass** die mediendichte Verbindung Folgendes umfasst:
- einen Verbinder (200), umfassend einen Überwurfring (210) und einen Einschraubstutzen (250), wobei der Überwurfring (210) eine erste schraubenlinienförmige, zur Mantelfläche des Rohres korrespondierende Kontur (220) aufweist und auf den Endbereich (110) des Rohres (100) auf die Mantelfläche außenseitig aufgeschraubt ist, und wobei der Einschraubstutzen (250) eine zweite schraubenlinienförmige, zur Mantelfläche des Rohres korrespondierende Kontur (260) aufweist und in den Endbereich (110) des Rohres (100) innenseitig eingeschraubt ist, wobei zumindest ein Abschnitt des Endbereiches (110) des Rohres (100) zwischen der ersten Kontur (220) des Überwurfringes und der zweiten Kontur (260) des Einschraubstutzens angeordnet ist,
und wobei der Überwurfring (210) zur Behebung eines Spiels zwischen dem Einschraubstutzen (250) und der Mantelfläche des Rohres sowie zwischen dem Überwurfring (210) und der Mantelfläche des Rohres gegen den Einschraubstutzen (250) verpresst ist, sodass der Abschnitt des Endbereiches (110) des Rohres mediendicht und formschlüssig an der ersten Kontur (220) des Überwurfringes und an der zweiten Kontur (260) des Einschraubstutzens anliegt.

3. Wärmespeicher nach Anspruch 2, **dadurch gekennzeichnet, dass** der Einschraubstutzen (250) einen Verbindungsabschnitt (251), welcher in einem eingeschraubten Zustand des Einschraubstutzens (250) in dem Rohr (100) von dem Endbereich (110) des Rohres vorsteht und zum Anschluss eines weiteren Einschraubstutzens oder einer weiteren Einrichtung zur Zu- und Abfuhr eines Mediums vorgesehen ist, und einen Schraubabschnitt (252), welcher die zweite schraubenlinienförmige Kontur (260) aufweist, umfasst.

4. Wärmespeicher nach einem der Ansprüche 2 oder 3, **dadurch gekennzeichnet, dass** die schraubenlinienförmig gewellte Mantelfläche als Gewinde mit Gewindegängen ausgebildet ist.

5. Wärmespeicher nach einem der Ansprüche 1 bis 4, **dadurch gekennzeichnet, dass** der zumindest eine Wärmetauscher (50) zumindest zwei Wendeln (140) umfasst, wobei sich das Rohr (100) in einer Wendel (140) ausgehend von einem maximalen Radius (Rmax) der Rohrschlange der Längsachse (X) radial annähert und bei einem Radius (R), kleiner als der maximale Radius (Rmax), zur nächsten Wendel (140) übergeht und sich ausgehend von dem kleineren Radius (R) der Längsachse (X) radial bis zum maximalen Radius (Rmax) entfernt.

6. Wärmespeicher nach Anspruch 5, **dadurch gekennzeichnet, dass** die Rohrschlange des zumindest einen Wärmetauschers (50) aufgrund von unterschiedlichen maximalen Radien (Rmax1, Rmax2, Rmax3) der Wendeln (140) einen konischen Verlauf aufweist.

7. Wärmespeicher nach einem der Ansprüche 1 bis 6, **dadurch gekennzeichnet, dass** der Wärmespeicher (10) zumindest zwei Wärmetauscher (50), vorzugsweise zumindest drei Wärmetauscher (50), umfasst.

8. Wärmetauscher nach Anspruch 7, **dadurch gekennzeichnet, dass** die Rohre (100) der zumindest zwei Wärmetauscher (50) als Rohrschlange mit zumindest in einer Orthogonalebene zur Längsachse (X) des Behälters (20) spiralförmig angeordneten Wendel (140) angeordnet sind, wobei die Rohre in der zumindest einen Orthogonalebene parallel zueinander verlaufen.

9. Wärmespeicher nach einem der Ansprüche 1 bis 8, **dadurch gekennzeichnet, dass** die Rohrschlange jedes Wärmetauschers (50) einen unterschiedlichen maximalen Radius (Rmax1, Rmax2, Rmax3) aufweist.

10. Wärmespeicher nach einem der Ansprüche 1 bis 9, **dadurch gekennzeichnet, dass** ein Wärmetauscher (50) in einem unteren Bereich des Behälters (20) angeordnet ist.

11. Wärmespeicher nach Anspruch 10, **dadurch gekennzeichnet, dass** der maximale Radius der Rohrschlange an der Innenwand des unteren Bereichs des Behälters (20) ausgerichtet ist, sodass der Abstand zwischen Rohr und Innenwand 1 bis 50 mm, vorzugsweise 1 bis 15 mm, ist.

12. Wärmespeicher nach einem der Ansprüche 1 bis 11, **dadurch gekennzeichnet, dass** der Wärmespeicher (10) eine Rohrhalterung (300) zur Aufhängung des Rohres (100) des zumindest einen Wärmetauschers (50) umfasst, wobei die Rohrhalterung (300) zumindest zwei parallel zur Längsachse (X) des Behälters (20) angeordnete Steher (310) und zumindest eine die zumindest zwei Steher (310) verbindenden Querbalken (320) umfasst, wobei Abschnitte des Rohres (100) an dem Querbalken (320) aufliegen.

13. Wärmespeicher nach Anspruch 12, **dadurch gekennzeichnet, dass** Abschnitte des Rohres (100) des zumindest einen Wärmetauschers (50) mittels mehrerer Führungslager (350) an den Stehern (310) der Rohrhalterung (300) angeordnet sind, wobei die Führungslager (350) vorzugsweise als Drähte ausgebildet sind.

14. Wärmespeicher nach Anspruch 12 oder 13, **dadurch gekennzeichnet, dass** die Steher (310) der Rohrhalterung (300) an ihren unteren Enden bzw. an den dem Kaltwasserzulauf (21) des Behälters (20) zugewandten Enden an einem Prallblech (400) befestigt sind, wobei das Prallblech (400) in seiner flächigen Ausdehnung orthogonal zur Längsachse (X) des Behälters (20) angeordnet ist.

## Claims

1. Heat accumulator (10) for storing water with at least one heat exchanger (50) for heating the water, which heat accumulator (10) comprises the following
- a container (20) with a longitudinal axis (X), in which the water to be heated can be stored, the container (20) having a cold water inlet (21) for supplying the cold water and a hot water outlet (22) for removing the hot water, the cold water inlet (21) being arranged in a lower region of the container (20) and the hot water outlet (22) being arranged in an upper region of the container (20),
- at least one heat exchanger (50), which is arranged within the container (20) and is configured to heat water arranged in the container (20) with the aid of a heat transfer medium which can be transported in the at least one heat exchanger (50),
wherein
the at least one heat exchanger (50) has a flexible metallic tube (100) with a shell surface, and wherein the tube (100) has at least two end regions (110),
and the tube (100) having at least one inlet (120) and at least one outlet (130) for the heat transfer medium, the inlet and outlet (120, 130) being arranged on the container (20) via a media-tight connection, **characterized in that** the circumferential surface is corrugated in a helical shape, and
the tube (100) of the at least one heat exchanger (50) is arranged as a tube coil with spirals (140) arranged at least in an orthogonal plane to the longitudinal axis (X) of the container (20).

2. Heat exchanger according to claim 1, **characterized in that** the media-tight connection comprises the following:
- a connector (200), comprising a union ring (210) and a screw-in socket (250), wherein the union ring (210) has a first helical contour (220) corresponding to the circumferential surface of the tube and is screwed onto the end region (110) of the tube (100) on the outside of the circumferential surface, and wherein the screw-in socket (250) has a second helical contour (220) corresponding to the circumferential surface of the tube, the screw-in socket (250) has a second helical contour (260) corresponding to the lateral surface of the tube and is screwed into the end region (110) of the tube (100) on the inside, at least one section of the end region (110) of the tube (100) being arranged between the first contour (220) of the union ring and the second contour (260) of the screw-in socket,
and wherein the union ring (210) is pressed against the screw-in socket (250) to eliminate play between the screw-in socket (250) and the circumferential surface of the tube and between the union ring (210) and the circumferential surface of the tube, so that the section of the end region (110) of the tube bears against the first contour (220) of the union ring and against the second contour (260) of the screw-in socket in a media-tight and form-fitting manner.

3. Heat accumulator according to claim 2, **characterized in that** the screw-in socket (250) comprises a connecting section (251) which, in a screwed-in state of the screw-in socket (250) in the tube (100), projects from the end region (110) of the tube and is provided for connecting a further screw-in socket or a further device for supplying and discharging a medium, and a screw section (252) which has the second helical contour (260).

4. Heat accumulator according to one of claims 2 or 3, **characterized in that** the helically corrugated outer surface is designed as a thread with threads.

5. Heat accumulator according to one of claims 1 to 4, **characterized in that** the at least one heat exchanger (50) comprises at least two coils (140), wherein the tube (100) in one coil (140), starting from a maximum radius (Rmax) of the tube coil, approaches the longitudinal axis (X) radially and, at a radius (R) smaller than the maximum radius (Rmax), passes to the next coil (140) and, starting from the smaller radius (R), approaches the longitudinal axis (X) radially up to the maximum radius (Rmax), smaller than the maximum radius (Rmax), passes to the next coil (140) and, starting from the smaller radius (R), moves radially away from the longitudinal axis (X) up to the maximum radius (Rmax).

6. Heat accumulator according to claim 5, **characterized in that** the tube coil of the at least one heat exchanger (50) has a conical shape due to different maximum radii (Rmax1, Rmax2, Rmax3) of the coils (140).

7. Heat accumulator according to one of claims 1 to 6, **characterized in that** the heat accumulator (10) comprises at least two heat exchangers (50), preferably at least three heat exchangers (50).

8. Heat exchanger according to claim 7, **characterized in that** the tubes (100) of the at least two heat exchangers (50) are arranged as a tube coil with spirals (140) arranged at least in an orthogonal plane to the longitudinal axis (X) of the container (20), the tubes running parallel to each other in the at least one orthogonal plane.

9. Heat accumulator according to one of claims 1 to 8, **characterized in that** the tube coil of each heat exchanger (50) has a different maximum radius (Rmax1, Rmax2, Rmax3).

10. Heat accumulator according to one of claims 1 to 9, **characterized in that** a heat exchanger (50) is arranged in a lower region of the container (20).

11. Heat accumulator according to claim 10, **characterized in that** the maximum radius of the tube coil is aligned with the inner wall of the lower region of the container (20), so that the distance between the tube and the inner wall is 1 to 50 mm, preferably 1 to 15 mm.

12. Heat accumulator according to one of claims 1 to 11, **characterized in that** the heat accumulator (10) comprises a tube holder (300) for suspending the tube (100) of the at least one heat exchanger (50), wherein the tube holder (300) comprises at least two uprights (310) arranged parallel to the longitudinal axis (X) of the container (20) and at least one crossbar (320) connecting the at least two uprights (310), wherein sections of the tube (100) rest on the crossbar (320).

13. Heat accumulator according to claim 12, **characterized in that** sections of the tube (100) of the at least one heat exchanger (50) are arranged on the uprights (310) of the tube holder (300) by means of a plurality of guide bearings (350), the guide bearings (350) preferably being designed as wires.

14. Heat accumulator according to claim 12 or 13, **characterized in that** the uprights (310) of the tube holder (300) are fastened to a baffle plate (400) at their lower ends or at the ends facing the cold water inlet (21) of the container (20), the baffle plate (400) being arranged in its planar extent orthogonally to the longitudinal axis (X) of the container (20).

## Revendications

1. Accumulateur de chaleur (10) pour stocker de l'eau avec au moins un échangeur de chaleur (50) pour chauffer l'eau, lequel accumulateur de chaleur (10) comprend ce qui suit :
- un réservoir (20) avec un axe longitudinal (X), dans lequel l'eau à chauffer peut être stockée, le réservoir (20) présentant une arrivée d'eau froide (21) pour l'amenée de l'eau froide et une sortie d'eau chaude (22) pour le prélèvement de l'eau chaude, l'arrivée d'eau froide (21) étant disposée dans une zone inférieure du réservoir (20) et la sortie d'eau chaude (22) dans une zone supérieure du réservoir (20),
- au moins un échangeur de chaleur (50) qui est disposé à l'intérieur du réservoir (20) et qui est conçu pour chauffer l'eau disposée dans le réservoir (20) à l'aide d'un fluide caloporteur pouvant être transporté dans le au moins un échangeur de chaleur (50),
dans lequel
l'au moins un échangeur de chaleur (50) présente un tube métallique flexible (100) avec une surface d'enveloppe, et où le tube (100) présente au moins deux zones d'extrémité (110),
et dans lequel le tube (100) présente au moins une entrée (120) et au moins une sortie (130) pour le fluide caloporteur, l'entrée et la sortie (120, 130) étant disposées sur le récipient (20) par l'intermédiaire d'une liaison étanche au fluide, **caractérisé en ce que** la surface d'enveloppe est ondulée en forme d'hélice, et
le tube (100) de l'au moins un échangeur de chaleur (50) est disposé sous forme de serpentin avec des hélices (140) disposées en spirale au moins dans un plan orthogonal à l'axe longitudinal (X) du récipient (20).

2. Accumulateur de chaleur selon la revendication 1, **caractérisé en ce que** le raccord étanche au fluide comprend :
- un connecteur (200), comprenant une bague d'accouplement (210) et un raccord à visser (250), la bague d'accouplement (210) présentant un premier contour hélicoïdal (220) correspondant à la surface d'enveloppe du tube et étant vissée sur la zone d'extrémité (110) du tube (100) sur la surface d'enveloppe côté extérieur, et le raccord à visser (250) présentant un deuxième contour hélicoïdal (220) correspondant à la surface d'enveloppe du tube, présentant un contour (260) correspondant à la surface d'enveloppe du tube et étant vissé du côté intérieur dans la zone d'extrémité (110) du tube (100), au moins une section de la zone d'extrémité (110) du tube (100) étant disposée entre le premier contour (220) de la bague d'accouplement et le deuxième contour (260) du raccord à visser,
et la bague d'accouplement (210) étant pressée contre le manchon à visser (250) pour éliminer un jeu entre le manchon à visser (250) et la surface d'enveloppe du tube ainsi qu'entre la bague d'accouplement (210) et la surface d'enveloppe du tube, de sorte que la section de la zone d'extrémité (110) du tube s'applique de manière étanche au fluide et par complémentarité de forme contre le premier contour (220) de la bague d'accouplement et contre le deuxième contour (260) du manchon à visser.

3. Accumulateur de chaleur selon la revendication 2, **caractérisé en ce que** le raccord à visser (250) comprend une section de liaison (251) qui, dans un état vissé du raccord à visser (250) dans le tube (100), fait saillie de la zone d'extrémité (110) du tube et est prévue pour le raccordement d'un autre raccord à visser ou d'un autre dispositif d'amenée et d'évacuation d'un fluide, et une section à visser (252) qui présente le deuxième contour hélicoïdal (260).

4. Accumulateur de chaleur selon l'une des revendications 2 ou 3, **caractérisé en ce que** la surface d'enveloppe ondulée en forme d'hélice est réalisée sous la forme d'un filetage avec des pas de vis.

5. Accumulateur de chaleur selon l'une des revendications 1 à 4, **caractérisé en ce que** l'au moins un échangeur de chaleur (50) comprend au moins deux hélices (140), le tube (100) se rapprochant radialement de l'axe longitudinal (X) dans une hélice (140) en partant d'un rayon maximal (Rmax) du serpentin et étant plus petit que l'axe longitudinal (X) lorsque le rayon (R), plus petit que le rayon maximal (Rmax), passe à l'hélice suivante (140) et s'éloigne radialement de l'axe longitudinal (X) en partant du rayon (R) plus petit jusqu'au rayon maximal (Rmax).

6. Accumulateur de chaleur selon la revendication 5, **caractérisé en ce que** le serpentin de l'au moins un échangeur de chaleur (50) présente un tracé conique en raison des différents rayons maximaux (Rmax1, Rmax2, Rmax3) des hélices (140).

7. Accumulateur de chaleur selon l'une des revendications 1 à 6, **caractérisé en ce que** l'accumulateur de chaleur (10) comprend au moins deux échangeurs de chaleur (50), de préférence au moins trois échangeurs de chaleur (50).

8. Accumulateur de chaleur selon la revendication 7, **caractérisé en ce que** les tubes (100) des au moins deux échangeurs de chaleur (50) sont disposés en serpentin avec des hélices (140) disposées en spirale au moins dans un plan orthogonal à l'axe longitudinal (X) du réservoir (20), les tubes étant parallèles entre eux dans ledit au moins un plan orthogonal.

9. Accumulateur de chaleur selon l'une des revendications 1 à 8, **caractérisé en ce que** le serpentin de chaque échangeur de chaleur (50) présente un rayon maximal (Rmax1, Rmax2, Rmax3) différent.

10. Accumulateur de chaleur selon l'une des revendications 1 à 9, **caractérisé en ce qu'**un échangeur de chaleur (50) est disposé dans une zone inférieure du réservoir (20).

11. Accumulateur de chaleur selon la revendication 10, **caractérisé en ce que** le rayon maximal du serpentin est aligné avec la paroi interne de la partie inférieure du réservoir (20), de sorte que la distance entre le tube et la paroi interne est de 1 à 50 mm, de préférence de 1 à 15 mm.

12. Accumulateur de chaleur selon l'une des revendications 1 à 11, **caractérisé en ce que** l'accumulateur de chaleur (10) comprend un support de tube (300) pour suspendre le tube (100) de l'au moins un échangeur de chaleur (50), le support de tube (300) comprenant au moins deux barrettes (310) disposées parallèlement à l'axe longitudinal (X) du réservoir (20) et au moins une barre transversale (320) reliant les au moins deux barrettes (310), des portions du tube (100) reposant sur la barre transversale (320).

13. Accumulateur de chaleur selon la revendication 12, **caractérisé en ce que** des sections du tube (100) de l'au moins un échangeur de chaleur (50) sont disposées sur les montants (310) du support de tube (300) au moyen de plusieurs paliers de guidage (350), les paliers de guidage (350) étant de préférence réalisés sous forme de fils.

14. Accumulateur de chaleur selon la revendication 12 ou 13, **caractérisé en ce que** les montants (310) du support tubulaire (300) sont fixés à leurs extrémités inférieures ou aux extrémités tournées vers l'arrivée d'eau froide (21) du réservoir (20) à une tôle d'impact (400), la tôle d'impact (400) étant disposée dans son extension plane orthogonalement à l'axe longitudinal (X) du réservoir (20).
